Europäisches Patentamt

European Patent Office

Office européen des brevets

(11) Publication number : **0 473 379 A2**

(12) **EUROPEAN PATENT APPLICATION**

(21) Application number : **91307792.1**

(22) Date of filing : **23.08.91**

(51) Int. Cl.$^5$ : **C08L 51/00, // (C08L51/00, 27:06, 101:00)**

(30) Priority : **30.08.90 US 575237**
**25.07.91 US 735494**

(43) Date of publication of application :
**04.03.92 Bulletin 92/10**

(84) Designated Contracting States :
**AT BE CH DE DK ES FR GB GR IT LI LU NL SE**

(71) Applicant : **ROHM AND HAAS COMPANY**
**Independence Mall West**
**Philadelphia Pennsylvania 19105 (US)**

(72) Inventor : **Post, Robert Lee**
**980 Almhouse Road**
**Ivyland, Pennsylvania 18974 (US)**
Inventor : **Rapacki, Steven Richard**
**510 Ashton Circle**
**Langhorne, Pennsylvania 19053 (US)**
Inventor : **Ludwig, Edward Garland, Jr.**
**250 chemin de Sartoux**
**F-06370 Mouans Sartoux (FR)**

(74) Representative : **Angell, David Whilton et al**
**ROHM AND HAAS (UK) LTD. European**
**Operations Patent Department Lennig House**
**2 Mason's Avenue**
**Croydon CR9 3NB (GB)**

(54) **Resin compositions.**

(57) A resinous composition, particularly suited for forming a surface layer with excellent weathering properties of a composite which includes an underlying layer of PVC or other structural plastic, comprises PVC resin together with other resin(s) and may in part dissociate to form continuous and discontinuous phases.

EP 0 473 379 A2

Jouve, 18, rue Saint-Denis, 75001 PARIS

This invention is concerned with resin compositions which can be used as capstock and in other applications. They are especially useful for coextrusion over or lamination to structural plastic such as poly(vinyl chloride). The invention also extends to the manufacture of such composites and to the articles produced therefrom.

Poly(vinyl chloride) resin (hereafter "PVC") has a combination of properties which make it particularly suitable for use as a structural material. In applications in which impact strength of the structural plastic is important, the PVC can be formulated with impact-modifier resins which improve the impact strength of the resulting composition. Such high impact-strength PVC compositions can be readily extruded or otherwise formed into a variety of articles which have excellent impact strength, toughness and other desired mechanical and chemical properties; for example siding for buildings, shutters, technical profiles for window and door frames, rain carrying systems, and fencings.

Such PVC compositions however have relatively poor weatherability characteristics, particularly poor color retention in darker grade colors such as browns and blues. The color is imparted to the PVC composition for example by the use of colorants such as pigments or dyes but sunlight causes unappealing changes in the colors which are more severe for darker than for light colors.

An attempted remedy is to incorporate into the PVC composition stabilizing additives, for example UV absorbers, thermal stabilizers and titanium dioxide, which yield improvements which are not sufficiently significant to meet industry-wide standards.

Another attempted rememdy is to apply another resinous material over the PVC to provide a surface that can withstand sunlight and other environmental conditions. Such a surfacing material is called "capstock". The capstock generally is much thinner than the structural plastic, typically being about 10 to about 25% of the total thickness of the composite (ie. the capstock and structural plastic plies). A typical capstock can be about 0.2 to about 2.5 mm thick whereas the structural plastic ply can be about 0.75 to about 10 mm thick.

The composite can be formed for example, by laminating preformed sheets or films of the PVC structural plastic and the capstock together by thermal fusion or by adhesive. Alternatively, the PVC and capstock can be coextruded, with feedblock coextrusion often being preferred to form a sheet of the composite which can be thermoformed into articles such as siding and shutters. Alternatively, multi-manifold dies can be used for forming coextruded technical profiles which can then be cut and welded to produce frames for doors and windows.

The capstock material must have a certain combination processing properties and other physical, chemical, and aesthetic properties, for it to be suitable including exceptional weathering characteristics, including excellent color retention, and it also must not affect adversely those properties which make PVC such a widely used building material.

Various types of resinous compositions have been disclosed for use as capstock, including PVC-based compositions and acrylic resin-based compositions.

U.S.-A-4,169,180 discloses a composite comprising an underlying ply made from a resin, such as PVC, which tends to be affected adversely by outdoor exposure and a protective surface ply comprising a resin prepared by sequential polymerization and comprising a crosslinked acrylate and/or methacrylate segment, a crosslinked styrene-acrylonitrile segment, and an uncrosslinked styrene-acrylonitrile segment.

U.S.-A-4,183,777 discloses a PVC-based capstock for PVC structural plastic. The capstock comprises a major amount of a vinyl chloride polymer and minor amounts of titanium dioxide and a plasticizer, for example, a phthalate plasticizer.

U.S.-A-4,229,549 discloses a resin composition which is described as having excellent weathering durability and excellent impact strength. The composition comprises 70 to 97 wt.% of a rigid thermoplastic resin such as PVC and 3 to 30 wt.% of an elastic alkyl acrylate copolymer prepared from 60 to 99.5 wt.% of an alkyl acrylate, 0.1 to 10 wt.% of a polyfunctional monomer having one or more conjugated double bonds and one or more non-conjugated double bonds and, optionally, up to 35 wt.% of a comonomer. Examples of the latter two monomers are octatrienes and 1,3-butadienes respectively. The resin composition is recommended for use as the outer layer of a multi-layer molded product.

U.S.-A-4,511,695 also discloses an acrylic resin-based graft copolymer which can be used as capstock which is said to have increased resistance to aging and better resistance to chemical solvents. This patent refers to laminates prepared from a film of the aforementioned copolymer laminated to a layer of a material comprising an ABS-PVC mixture.

Capstocks formed from the aforementioned resinous compositions generally have poor weather resistance with regard to initial color retention. Some have disadvantages in reprocessing of trimmings and the like for the purpose of conserving material and realizing economies. Some exhibit poor miscibility with resinous compositions comprising the structural plastic ply of the composite. This makes it difficult to recycle and re-use trimmings.

We have now found that resinous compositions comprising:

(A) from about 20 to about 50 parts by wt. of poly(vinyl chloride) resin (PVC);

(B) from about 50 to about 75 parts by wt. of a plurality of multi-layered, sequentially-produced, acrylic resin-based polymeric particles having an elastomeric crosslinked core sheathed by a plurality of polymeric shells, a resin portion thereof being dissociated therefrom, the dissociated portion of resin being compatible or miscible with said PVC;

(C-1) from about 17 to about 38 parts by wt. of a thermoplastic resin (other than said PVC) which has weathering properties and is compatible or miscible with said PVC;

(C-2) from about 12 to about 33 parts by wt. of an acrylate-based, hard core, impact-modifier resin in the form of discrete particles;

(C-3) from about 12 to about 33 parts by wt. of an acrylate-based, non-dissociable, soft core, impact-modifier resin in the form of discrete particles;

in the possible combinations: (A) plus (B); (A) plus (C-1) plus (C-2); (A) plus (C-1) plus (C-3); (A) plus (B) plus (C-1);

wherein the resins (as present) of (A) and (C-1) above and the dissociated portion of resin of (B) above constitute a continuous phase of said composition in which are dispersed (as present) the residual particles of (B) above and the resin particles of (C-2) and (C-3) above, are surprisingly useful as capstock resins.

In preferred form, the PVC constituent of the composition of the present invention comprises a homopolymer of vinyl chloride, particularly a homopolymer having a Fikentscher K-value of from about 62 to about 70, most preferably from about 66 to about 69 and the thermoplastic resin (C-1) has a molecular weight of at least about 80,000 daltons and is either a methyl methacrylate resin or a copolymer of methyl methacrylate and a $C_1$ to $C_4$ alkyl acrylate. In particularly preferred form, the (C-1) constituent comprises a copolymer prepared by polymerizing a major amount of methyl methacrylate with a minor amount of lower alkyl acrylate, most preferably ethyl acrylate, with the molecular weight of the copolymer being from about 80,000 to about 130,000 daltons or higher, more preferably, from about 90,000 to about 120,000 daltons.

By "molecular weight" we mean weight average molecular weight which may be estimated by conventional gel permeation chromatographic methods, using poly (methyl methacrylate) standards for calibration. The term "dalton" means atomic mass unit.

In preferred form, the acrylic resin-based polymer constituent (B) comprises a resin of the type described in U.S.-A-4,141,935 and the acrylate-based, hard core, impact-modifier resin constituent (C-2) comprises multi-layered resin particles of the type described in U.S.-A-3,793,402.

Other aspects of the present invention comprise:

(a) capstock formed from the composition of the invention and other articles formed therefrom, including, for example, sheets, films, and a plastic composite formed from the composition of this invention and overlying and integrally bonded to an underlying structural plastic ply, especially a ply formed from PVC;

(b) a method for forming a plastic composite comprising a surfacing material formed from a composition of the invention and an underlying plastic material, particularly PVC. The preferred method (b) is feedblock coextrusion when a sheet or sheet-like product is desired and multi-manifold die coextrusion for a technical profile having a complex shape.

Articles can be formed from the composition of the invention having excellent weather-resistant characteristics, including color retention, which may be achieved in compositions formulated from light or dark colorants, improved economics, improved flame-resistant characteristics and improved re-processability. As to improved reprocessability, compositions can exhibit good compatability when combined with plastic materials comprising the composite and/or with the material comprising the structural plastic ply in recycling techniques which involve regrinding of such materials and re-extrusion.

An essential ingredient of the composition of the present invention is PVC which comprises a continuous phase of the composition and is sometimes referred to herein as a "matrix resin". In this invention, the PVC constituent is a thermoplastic homopolymer or copolymer of vinyl chloride such as the type widely utilized in the production of plastic articles. By "poly(vinyl chloride) resin" or "PVC", we mean a homopolymer or copolymer of vinyl chloride which has vinyl chloride as the major (greater than 50 wt.%) component and we include chlorinated PVC. Thus, the PVC constituent can be a homopolymer of poly(vinyl chloride) or a copolymer of vinyl chloride and one or more other monomers, for example, vinyl acetate and the like, vinylidene halides such as vinylidene chloride, alkyl esters of carboxylic acids such as acrylic acid, ethyl acrylate, 2-ethylhexyl acrylate and the like, unsaturated hydrocarbons such as ethylene, propylene, isobutylene and the like, allyl compounds such as allyl acetate and the like. In the use of a copolymer of vinyl chloride, it is preferred that the vinyl chloride content comprise at least about 80 wt.% of the copolymer. The PVC constituent can comprise a mixture of a homopolymer and one or more copolymers of vinyl chloride and/or a chlorinated PVC or a mixture of two or more copolymers of vinyl chloride and/or a chlorinated PVC.

3

The molecular weight and molecular weight distribution of the PVC can vary over a wide range. In applications involving extruded construction products, it is preferred that the PVC have a Fikentscher K-value of from about 62 to about 70, most preferably from about 66 to about 69. The Fikentscher K-value is determined by the formula

$$\text{Log}\,\eta_{rel}/c = (75 \times 10^{-6}K^2)/(1 + 1.5 \times 10^{-3}KC) + 10^{-3}K$$

where C is 0.5 g/100 ml concentration of polymer in solvent,
$[\eta]$ rel is relative viscosity in cyclohexanone at 25°C, and
K is Fikentscher value.

Preferably, the PVC constituent is vinyl chloride homopolymer.

The invention comprises: in one embodiment, a composition which includes, PVC and particles of a multi-layered, sequentially-produced, acrylic resin-based polymer having an elastomeric crosslinked core sheathed by a plurality of polymeric shells, an outer portion of which is capable of dissociating from the particle (also referred to herein as "dissociable soft core modifier"); and, in second and third embodiments, compositions which include, as essential ingredients, a mixture of at least two matrix resins, namely, PVC, and a thermoplastic resin which has weathering properties and which is compatible or miscible with PVC, and either an acrylate-based, hard core, impact modifier resin or an acrylate-based, non-dissociable, soft core, impact modifier resin (also referred to herein respectively as "hard core modifier" and "non-dissociable soft core modifier"). The former composition is referred to herein as "PVC/dissociable soft core composition" and the latter compositions are referred to herein respectively as "PVC/hard core composition" and "PVC/non-dissociable soft core composition".

## PVC/Dissociable Soft Core Composition

The nature of the dissociable, soft-core modifier is such that it imparts to the PVC-based composition improved weatherability characteristics, as well as improved impact strength; for example copolymer particles having an elastomeric crosslinked core sheathed by a plurality of polymeric shells, a portion of which has the ability to dissociate from the particle. Portions of such particles have the capability of dissociating under melt processing conditions, with the outer shell portion separating from the inner portion which retains its form as a discrete particle US-A-4141935 describes a preferred class of such resins which comprise acrylic resin-based copolymer particles having an elastomeric cross-linked core sheathed by three increasingly harder thermoplastic copolymer shells. Such resins are multiple stage, sequentially produced polymers, that is, polymers which are prepared in aqueous dispersion or emulsion and which are polymerized in the presence of a preformed latex prepared from a prior monomeric charge and in which each succeeding stage of polymer is attached to or intimately associated with that of its preceding stage. The resin comprises:

(A) a first elastomeric, relatively soft first-stage polymer polymerized from an aqueous emulsified monomeric system containing: (1) from about 75 to about 99.8 wt.%, preferably from about 94 to about 99.8 wt.%, of a least one $(C_2$ to $C_8)$-alkyl acrylate; (2) from about 0.1 to about 5 wt.%, preferably from about 0.25 to about 1.5 wt.%, of at least one crosslinking polyethylenically unsaturated monomer; and (3) from about 0.1 to about 1 wt.% of at least one graftlinking polyethylenically unsaturated monomer; and (4) the balance, to total 100 wt.% of the first-stage monomeric system, comprising one or more copolymerizable monoethylenically unsaturated monomers, with the monomeric system being chosen so that the maximum glass transition temperature is not over -20°C;

(B) a second-stage polymer polymerized, in the presence of the resultant aqueous system from the first-stage polymerization, from an aqueous emulsified monomeric system containing: (5) from about 10 to about 90 wt.% of at least one $(C_2$ to $C_8)$-alkyl acrylate; (6) from about 9 to about 89.9 wt.% of at least one $(C_1$ to $C_4)$-alkyl methacrylate; and (7) from about 0.1 to about 1 wt.% of at least one graftlinking polyethylenically unsaturated monomer;

(C) a third-stage polymer polymerized, in the presence of the resultant aqueous system from the second-stage polymer, from an aqueous emulsified monomeric system containing: (8) from about 5 to about 40 wt.% of at least one $(C_2$ to $C_8)$-alkyl acrylate; and (9) from about 60 to about 95 wt.% of at least one $(C_1$ to $C_4)$-alkyl methacrylate; and

(D) a final fourth-stage polymer having a glass transition temperature of at least 60°C polymerized, in the presence of the resultant aqueous system from the third-stage polymerization, from an aqueous emulsified monomeric system containing: (10) from about 80 to about 100 wt.% of at least one $(C_1$ to $C_4)$-alkyl methacrylate; and (11) the balance, to total 100 wt.% of the fourth-stage monomeric system, of at least one $(C_1$ to $C_8)$-alkyl acrylate.

By "crosslinking polyethylenically unsaturated monomer" or "crosslinking monomer", we mean copolymerizable monomer which contains at least two addition polymerizable unsaturated functional groups, each of which polymerize at about the same rate, for example acrylic and methacrylic esters of polyols such as, for example, butylene diacrylate and dimethacrylate, trimethylolpropane trimethacrylate, and the like; di- and trivinyl benzene, and the like; and vinyl esters such as vinyl acrylate; and other crosslinking monomers. The alkylene diacrylates are preferred for crosslinking with the alkyl acrylates of the first stage.

By "graftlinking polyethylenically unsaturated monomer" or "graftlinking monomer", we mean a copolymerizable monomer which contains at least two addition polymerizable unsaturated functional groups, each of which polymerize at substantially different rates with respect to each other, for example allyl, methallyl, and crotyl esters of ,β-unsaturated monocarboxylic and dicarboxylic acids such as, for example, allyl methacrylate and acrylate; and diallyl maleate, fumarate, and itaconate. Allyl methacrylate and acrylate are preferred.

Examples of copolymerizable monoethylenically unsaturated monomers which can be used in the first-stage monomeric system of (A)(4) above are vinylidene chloride, vinyl chloride, acrylonitrile, vinyl esters, o-, m-, and p-methyl styrenes, -alkylstyrenes, and the like.

The first-stage polymer may comprise about 10 to about 75% of the total weight of the resultant four-stage polymer, with the balance being distributed evenly or unevenly among the subsequent stages, and with the provision that no single subsequent stage is present in an amount less than 20% nor more than 75% of the total amount of the weight of the remaining subsequent stages.

The multiple-stage polymers typically have melt index values of from about 0.01 to about 20, with values of from about 3 to about 8 being preferred. The polymers desirably have minimum film-forming temperatures (MFT) of from about 60 to about 100°C. It is desirable that the average particle size of the first stage polymer be from about 500 to about 4000 angstrom units.

In preparing the dissociable, soft core modifier, the first-stage reaction preferably includes from about 94 to about 99.8 wt.% of butyl acrylate, from about 0.25 to about 1.5 wt.% of crosslinking monomer, and from about 0.1 to about 1 wt.% of graftlinking monomer. The fourth-stage reaction preferably includes methyl methacrylate.

It is believed that the compositions that will be most widely used will comprise from about 20 to about 50 wt.% of PVC and from about 50 to about 75 wt.% of the dissociable, soft core modifier, with preferred amounts comprising from about 38 to about 48 wt.% of PVC and from about 50 to about 60 wt.% of the modifier.

While not intending to be bound by considerations of theory, we believe that, when the PVC/dissociable soft core composition is compounded by melt extrusion, an outer portion of the four-stage acrylic polymeric particle forms with the PVC a homogeneous alloy matrix phase which has dispersed therein, in discrete particle form, the inner portion (including the core) of the particle from which the outer portion has dissociated. This alloy matrix phase which does not include any crosslinked resin comprises the "flowable" portion of the composition during melt processing. The fourth stage of the soft core dissociable resin particle, which is essentially ungrafted to the third stage, is available in its entirety to dissociate from the inner portion of the particle under melt processing conditions and to form the PVC/acrylic alloy matrix phase. In addition, a portion (for example, about one-half) of the third stage, which is only partly grafted to the second stage, is free to separate from that stage and is thus available to be included in the alloy matrix phase. The presence of the highly-weatherable acrylic polymer chains, separating and diluting the less-weatherable PVC portion of the matrix, is believed to contribute substantially to stabilizing the photochemical degradation of the PVC, resulting in the observed excellent weathering performance of the composition.

As such, the dissociable soft-core modifier can be considered as comprising a multi-layered, sequentially-produced acrylic resin-based polymer having an elastomeric cross-linked core sheathed by a plurality of polymeric shells, including an outer shell portion, and in which a substantial proportion of the shell portion of the polymer, that is, at least about 20 wt.% based on the total weight of the polymer, has the ability to dissociate therefrom under melt processing conditions to form a homogeneous alloy matrix phase with PVC. Preferably, at least about 30 wt.% of the shell portion of the polymer is capable of dissociating in the aforedescribed way. Generally speaking, such dissociation will not exceed about 50 wt.% of the total weight of the polymer.

In preferred form, the dissociable portion of the soft core modifier is miscible with the PVC constituent of the matrix phase of the composition. By "miscible" we refer to the ability of a resin such as, for example, the dissociable portion of the modifier to form with PVC a molecular mixture which is microscopically homogeneous, for example, a uniform blend that is characterized by the absence of microscopic regions or domains which are rich in the individual species of resins. Such uniform blends of resins are characterized by having a glass transition temperature which is intermediate the glass transition temperature of the individual species of resins. Thus, the glass transition temperatures of the individual species of resins are not detectable using conventional techniques such as differential scanning, calorimetry or dynamic mechanical analysis. The dissociable portion of polymeric particles of US-A-4141935 patent are miscible with PVC.

The present also includes dissociable soft core modifiers having a dissociable portion which is compatible with the PVC constituent of the matrix phase of the composition. By "compatible" we refer to the ability of a resin such as, for example, the dissociable portion of the modifier to form with PVC an intimate admixture in which the PVC and dissociable portion adhere tightly to one another in a mixture that is not homogeneous in the sense that it includes microscopic regions or domains which are rich in the individual species of resins. Such admixtures are identifiable by the fact that the glass transition temperatures of individual species of resins are detectable in the mixture using conventional techniques such as differential scanning, calorimetry or dynamic mechanical analysis.

## PVC/Hard Core and Non-dissociable Soft Core Compositions

These embodiments comprise a major amount of matrix resin (a mixture of PVC and a PVC-miscible or PVC-compatible thermoplastic resin having weathering properties) and a minor amount of either an acrylate-based, hard core, impact-modifier resin or an acrylate-based, non-dissociable, soft core, impact-modifier resin or a mixture thereof.

The thermoplastic resin which forms, in combination with PVC, the matrix portion of the composition of the invention can be selected from any of a variety of thermoplastic resins which are known to have good weathering characteristics, that is, the resins are capable of retaining their chemical and/or physical properties when subjected to outdoor conditions which typically include exposure to: the rays of the sun; elevated temperatures of 80-90°F or more; temperatures below freezing; relatively rapid fluctuations in temperature; and to rain, snow, sleet, etc. Examples are (a) alpha-methyl styrene/methacrylate resins, methacrylate/acrylate resins, methacrylate resins and poly(vinyl fluoride) resins and (b) styrene/methacrylate resins and styrene/acrylonitrile resins; category (a) resins having better weathering characteristics than category (b).

In addition to having good weathering characteristics, the thermoplastic resin is compatible with the PVC constituent of the matrix phase of the composition. Preferably, the thermoplastic resin is miscible with the PVC constituent of the matrix phase of the composition, "miscible" and "compatible" have the same meanings as hereinbefore. Styrene/methacrylate resins (including alpha-methyl styrene) and styrene/acrylonitrile resins exemplify resins which are compatible with PVC. Methacrylate resins and methacrylate/acrylate resins exemplify resins which are miscible with PVC and which have excellent weathering characteristics and are preferred over the former because of their better combination of properties.

Particularly preferred thermoplastic resins comprise polymerized methyl methacrylate or copolymer of a major amount of methyl methacrylate and a minor amount of an $(C_1-C_4)$-alkyl acrylate, preferably methyl or ethyl acrylate, and most preferably ethyl acrylate. The copolymer can comprise from about 85 to about 99.9 wt.% of the methyl methacrylate and from about 0.1 to about 15 wt.% of the alkyl acrylate. Preferably, the alkyl acrylate content of the copolymer is from about 5 to about 15 wt.%, and most preferably from about 8 to about 13 wt.%, with the balance of the copolymer comprising methyl methacrylate.

An increase in the alkyl acrylate content of the copolymer increases the melt flow index and decreases the melt viscosity of the copolymer, as well as the resin composition of which it is a part. Minimizing the alkyl acrylate content also increases the hardness, the scratch resistance, and the resistance to attack on the capstock by chemicals.

The molecular weight of the preferred acrylic matrix resin is at least about 80,000 daltons and can be as high as 130,000 daltons or even higher. Preferably, the molecular weight is from about 90,000 to about 120,000, and most preferably from about 90,000 to about 105,000 daltons. Increasing the molecular weight of the copolymer, all else being the same, decreases the melt flow index and increases the melt viscosity of the copolymer and the resin composition of which it is a part. Increasing the molecular weight also improves the chemical resistance and tensile properties of the composition.

In general, the acrylic copolymer is a random copolymer which is advantageously prepared via free radical-catalyzed bulk polymerization of a mixture of the two monomers, in a continuous flow, stirred tank reactor, with an organic peroxide to about 50% conversion. The polymer-monomer mixture is pumped to a devolatilizing twin-screw extruder where residual monomer is removed and other additives can be added. The technique for conducting this polymerization is known. The random copolymer can be prepared also by bulk casting, or by suspension or emulsion polymerization, the latter being most preferred. The emulsion-prepared copolymer can be isolated by spray drying or coagulation, washing, and drying, or by coagulation, washing and extrusion devolatilization to pellets.

It is believed that use of the weatherable thermoplastic matrix resin in the composition functions to improve the resistance to photochemical degradation, oxidation, and other mechanisms that contribute to the overall degradation of conventional exterior grade PVC formulations.

The hard core or non-dissociable soft core impact modifiers are particles of acrylate-based, multi-layered resins or polymers in which the central or innermost portion of the multi-layered resin (referred to as the "core") is sheathed successively with one or more resin layers or shells. As is well known, such multi-layered resins are prepared typically by multi-stage polymerizations which are conducted sequentially.

6

The improvement of impact resistance of PVC by adding either hard core or non-dissociable soft core multi-layered, sequentially-produced acrylic resin-based polymers of the type useful in the invention is known. Typically, such compositions comprise a continuous phase of PVC having dispersed therein discrete particles of the aforementioned-type resin. In general the addition of hard core modifier improves weathering characteristics more than non-dissociable soft core modifier, whereas non-dissociable soft core modifier improves impact resistance more than hard core modifier. Both hard core and non-dissociable soft core modifiers have outer shells or layers which may be of independent and varying degrees of hardness or softness (as measured by Tg), of crosslinking and/or graftlinking levels, of polymer or copolymer compositions, etc, depending on the uses and properties ultimately desired.

A hard core modifier often includes a core comprising non-elastomer polymer or copolymer which is crosslinked and/or graftlinked and whose glass transition temperature generally is above room temperature (25°C), usually above 40°C. Examples of monomers used in major amounts in the preparation of hard core polymers include styrene, alkyl styrenes, and a ($C_1$ to $C_4$)-alkyl methacrylate, with other monomers commonly used in minor amounts.

A non-dissociable soft core modifier generally includes a core comprising a polymer or copolymer which may be crosslinked and/or graftlinked to confer rubber-like or elastomeric properties to the core, and whose glass transition temperature is typically at or below room temperature, more typically below 0°C. Examples of monomers which are typically used in major amounts in the preparation of such modifiers are butadiene and other dienes; ethylene-propylene-diene combinations, butadiene-styrene, and ($C_1$ to $C_8$)-alkyl acrylates, with other monomer typically being used in minor amounts. Non-dissociable soft core modifiers generally differ from dissociable soft core modifiers in that their layers are chemically linked one to the other, or are intertwined and locked at the interface due to crosslinking of the polymers of each layer, forming an inter-penetrating polymer network.

The hard core and non-dissociable soft core modifiers function primarily to enhance the physical properties of the composition, for example, toughness and impact resistance. The use of the modifiers also improves resistance to stress whitening and fading due to weathering. The preparation, blending and use of such resins are well known.

The preferred PVC/weatherable thermoplastic resin/impact modifier composition of the present invention includes a hard core impact modifier. Such compositions typically have a better combination of properties than like compositions prepared from a non-dissociable soft core modifier.

## PVC/Hard Core Composition

US-A-3793402 describes the preferred type of hard core modifier comprising multi-layered polymeric particles useful in the invention and which may be prepared by multiple stage sequential polymerizations. Such particles comprise at least three sequential stages of non-elastomeric first stage polymer, elastomeric second stage polymer and relatively hard third stage polymer, with the monomers (co-monomers) used in preparing each stage of the resin being selected, to provide stages or layers of the desired hardness. The non-elastomeric first stage polymer has a glass transition temperature of greater than about 25°C, and is linked to elastomeric subsequent stage polymer of glass transition temperature about 25°C or less, preferably less than about 10°C, which is in turn linked to subsequent stage polymer of glass transition temperature preferably greater than about 25°C, and most preferably at least about 60°C.

Preferred particles are those in which the core and outer layers are linked by allyl methacrylate graft-linking monomer and in which the core and outer layers comprise resins which are made from the same monomer(s) as are used to prepare the preferred acrylic matrix resin of the composition, that is, homopolymers of methyl methacrylate or random copolymers of methyl methacrylate and ($C_1$ to $C_4$)-alkyl acrylate, most preferably ethyl acrylate, and optionally, a polyfunctional cross-linking monomer. When the matrix resin comprises a copolymer of methyl methacrylate and ethyl acrylate, it is highly preferred that each of the core and outer layers comprise about 96 wt.% of methyl methacrylate and about 4 wt.% of ethyl acrylate, with the graft-linking monomer comprising about 1 wt.%. As taught in US-A-3793402, various types of monomers can be used to prepare the intermediate layer of the particles, for example the intermediate layer may comprise a random copolymer of butyl acrylate, styrene, and less than about 2 wt.% of the cross-linking and graft-linking monomers.

The product of the sequential stage polymerization comprises a latex, that is, an aqueous composition containing dispersed therein the multi-layered polymeric particles. The particles can be recovered from the latex by spray drying or by coagulation and drying. Spray drying can be advantageously carried out in the presence of a drying aid, for example, an acrylate-based resin which can be the same as or different from the matrix resin described herein. The "drying-aid" resin should, of course, be compatible with the other constituents of the resin composition and not affect adversely the chemical, physical, or aesthetic properties of the composition or arti-

EP 0 473 379 A2

cles made therefrom. A preferred "drying-aid" resin comprises a random copolymer of methyl methacrylate and an ($C_1$ to $C_4$)-alkyl acrylate which includes from about 90 to about 99.9 wt.% of the methyl methacrylate and from about 0.1 to about 10 wt.% of the acrylate, preferably ethyl acrylate. The molecular weight of the copolymer can vary over a wide range, for example, from about 95,000 to about 200,000 daltons. The molecular weight is preferably from about 95,000 to about 110,000 daltons. This resin can remain with the particles where it serves to function as a portion of the acrylic matrix resin.

Indeed, other thermoplastic acrylic-based resins can also be included in the composition for the purpose of achieving desired effects or functioning as processing aids, for example, high molecular weight methyl methacrylate-ethyl acrylate copolymers having a molecular weight of at least about 1,000,000.

Other types of acrylate-based, hard core impact-modifier resins can be used in the composition of the present invention, either in place of the preferred resin described in US-A-3793402 or in admixture therewith. Such resins, which function to increase the impact resistance of articles made from the composition, are multi-layered polymeric particles which are prepared by multiple stage sequential polymerization and which include a hard (non-elastomeric) core comprising preferably a major amount of a homopolymer of methyl methacrylate or a copolymer of methyl methacrylate and an alkyl acrylate. Examples of such hard core, impact modifier resins are disclosed in US-A-4,052,525 and 4,433,103, Japanese Kokai 58-180514, and EP-A-270,865.

It is believed that the compositions that will be most widely used will comprise from about 20 to about 50 wt.% of PVC, and from about 17 to about 38 wt.% of the weather-resistant resin, and from about 12 to about 33 wt.% of the hard core acrylic resin, with preferred amounts comprising from about 40 to about 50 wt.% of PVC, and from about 25 to about 35 wt.% of the weather-resistant resin and from about 15 to about 25 wt.% of the hard core acrylic resin.

Non-dissociable Soft Core Composition

The preferred type of non-dissociable soft core modifier for use in the practice of the present invention is described in U.S.-A-3,808,180, comprises multi-layered polymeric particles, which again can be prepared by multiple stage sequential polymerization, and comprise at least two layers comprising an elastomeric core chemically linked to a rigid thermoplastic layer. The particles can be prepared by emulsion polymerization of the elastomer as a discrete phase comprising the core from a monomer mix of at least about 50 wt.% alkyl and/or aralkyl acrylate, from about 0.05 to about 5 wt.% of a poly-unsaturated crosslinking monomer, from about 0.05 to about 5 wt.% of a graft-linking comonomer, and from 0 to about 10 wt.% of a hydrophilic comonomer. Preferably the elastomeric phase monomer mix contains from about 0.1 to about 1 wt.% of a cross-linking comonomer, from about 0.1 to about 1 wt.% of a graft-linking comonomer, and from about 0.5 to about 5 wt.% of hydrophilic comonomer, together with at least about 50 wt.% alkyl and/or aralkyl acrylate.

Upon completion of the polymerization of the elasomeric phase, ie, substantial exhaustion of the monomers in the initial polymerization mix, the rigid thermoplastic is then formed by polymerization, in the same emulsion, of a monomer mix comprising at least about 50 wt.% ($C_1$ to $C_4$)-alkyl methacrylate, adding the monomers in such a fashion that substantially all the rigid phase material is formed on or at the surface of the elastomeric phase and has a minimum attachment level, as hereinafter defined, of about 20%.

In preparing the elastomeric core, there can be used alkyl esters of acrylic acid having alkyl groups of 1 to about 15 carbon atoms, preferably 1 to about 8, and most preferably 2 to 8 carbon atoms. Longer chain alkyl groups may be used. Other acrylic monomers, up to about 50 wt.%, less the other inclusions, can also be used, such as aralkyl esters of acrylic acid wherein the cyclic portion contains 5, 6 or 7 carbon atoms, with or without an additional alkyl bridge, and with the alkyl portion of the aralkyl group containing up to about 15 carbon atoms. Substituted acrylates or methacrylates including alkylthioalkyl acrylates such as ethylthioethyl acrylate, and the like, alkoxyalkyl acrylates, such as methoxyethyl acrylate, and the like can also be used. Interpolymers with these acrylates can be based on up to about 40 wt.% of one or more other addition polymerizable monomers such as styrene, -methyl styrene, vinyl etheres, amides, and esters, vinyl and vinylidene halides, and the like.

In more preferred formulations, the elastomeric core is prepared from about 50 to about 80 wt.% of an alkyl acrylate, where the alkyl group contains 2 to 4 carbon atoms, more preferably 4 carbon atoms, from about 0.1 to about 10 wt.% other acrylic monomers, from about 0.1 to about 1 wt.% cross-linking monomers, from about 0.1 to about 1 wt.% graft-linking monomers, from about 0 to about 5, more preferably 0.5 to 5, wt.% hydrophilic monomer, and the balance other non-acrylic unsaturated monomers, more preferably styrene, -methyl styrene, and halostyrenes.

Preferred elastomers have a glass temperature less than 25°C more preferably less than 10°C, and most preferably less than -25°C. In all cases, these glass temperatures refer to the elastomeric portion of the modifier only and do not include any subsequent phases or other polymers attached physically or chemically onto or into the particles of the elastomer.

8

A particularly preferred elastomeric core comprises from about 50 to about 80 parts by weight alkyl acrylate units, wherein the alkyl group contains 1 to 8 carbon atoms, from 0 to about 40 parts by weight of units of other ethylenically unsaturated monomer, from about 0.05 to about 5 parts by weight of units of at least one polyunsaturated crosslinking monomer, from about 0.05 to about 5 parts by weight of units of graft-linking monomer, and from 0 to about 10 parts by weight of units of at least one hydrophilic monomer. Preferred are those acrylic elastomers wherein the polymer comprises from about 50 to about 100 parts by weight alkyl acrylate, wherein the alkyl group contains 1 to 8 carbon atoms, from about 1 to about 20 parts by weight other acrylic monomer, from about 5 to about 20 parts by weight other ethyleneically unsaturated monomer, preferably those other ethylenically unsaturated units being aromatic, such as styrene and substituted styrene, from about 0.1 to about 1 part by weight of at least one polyethylenically unsaturated cross-linking monomer unit, from about 0.1 to about 1 part by weight of graft-linking monomer, and from about 0.5 to about 5 parts by weight of at least one hydrophilic monomer.

The acrylic elastomers include polyfunctional unsaturated monomers capable of cross-linking the elastomer, such as polyethylenically unsaturated monomers like polyacrylates and polymethacrylates, and monomers capable of ionic and coordinate cross-linking such as acid groups and organic and inorganic bases and other electron donating groups co-ordinating with suitable electrophilic agents. The polyethylenically unsaturated monomers include polyacrylic and polymethacrylic esters of polyols such as butylene diacrylate and dimethacrylate, trimethylolpropane trimethacrylate, and the like, di- and trivinyl benzene, vinyl acrylate and methacrylate and other cross-linking monomers.

As to the graft-linking monomers, allyl group-containing compounds are preferred, particularly allyl esters of ethylenically unsaturated acids. Most preferred are allyl acrylate, allyl methacrylate, diallyl maleate, diallyl fumarate, diallyl itaconate, allyl acid maleate, allyl acid fumarate, and allyl acid itaconate.

With respect to the use of hydrophilic monomers, it is preferred to utilize methacrylic compounds, particularly the amides and hydroxy alkyl esters of methacrylic acid.

The rigid thermoplastic phase of the non-dissociable soft core modifier comprises acrylic polymers having a majority (e.g., 50-100%) of alkyl methacrylate units in the polymer. The acrylic polymers have a heat distortion temperature greater than about 20°C. preferably greater than about 50°C.

The rigid thermoplastic portion of the particle is prepared of from about 50 to about 100 wt.% alkyl methacrylate, wherein the alkyl group contains 1 to 4, preferably 1, carbon atoms, and from 0 to about 50 wt.% of one or more acrylic comonomers such as other alkyl and aryl methacrylates, alkyl and aryl acrylates, alkyl and aryl acrylamides, substituted alkyl and aryl methacrylates and acrylates such halogen, alkoxy, alkylthio, cyanoalkyl, amino, alkylthiol esters, and other substitutions, and from 0 to about 40 wt.% of other unsaturated monomers, including acrylonitrile and methacrylonitrile, styrene monomers and substituted styrene monomers, vinyl esters, vinyl ethers, vinyl amides, vinyl ketones, vinyl halides, vinylidene halides, and olefins. Generally, as the comonomer system chosen is softer, less is used in order to retain the rigid characteristics desired.

Preferred monomers which may be used to prepare the acrylic polymers include alkyl esters of methacrylic and acrylic acids wherein the alkyl group contains 1 to 4 carbon atoms. The preferred cycloalkyl esters of methacrylic and acrylic acids have cycloalkyl group containing 4 to 14 carbon atoms.

The non-dissociable soft core modifier can be prepared by suspension or emulsion polymerization procedures utilizing a multistage or sequential technique. In simplest form, the elastomeric phase is formed in a first stage, and the rigid thermoplastic phase is formed in a second stage. The elastomeric phase or rigid phase can also be sequentially polymerized.

Other types of acrylate-based, non-dissociable, soft core, impact-modifier resins can be used in the composition of the present invention, either in place of the preferred resin described in US-A-3793402 or in admixture therewith. As described hereinabove, such resins, which function to increase the impact resistance of articles made from the composition, are also multi-layered polymeric particles which are prepared by multiple stage sequential polymerization. Examples of such non-dissociable soft core modifiers are disclosed in US-A-4,096,202; 4,180,529; 4,508,875; and 4,730,023 and Japanese Kokai 59-124916.

It is believed that the compositions that will be most widely used will comprise from about 20 to about 50 wt.% of PVC, from about 17 to about 38 wt.% of the weather-resistant resin, and from about 12 to about 33 wt.% of the non-dissociable soft core modifier, with preferred amounts comprising from about 40 to about 50 wt.% of PVC, from about 25 to about 35 wt.% of the weather-resistant resin and from about 15 to about 25 wt.% of the non-dissociable soft core modifier.

Description Applicable to the Several Embodiments of the Invention

For some applications, it is preferable to include in the PVC/dissociable soft core composition and the PVC-/hard core composition another resin which functions to still further improve the impact resistance of these compositions. For example, the use of an additional impact-resistant improver can be advantageous in applications where the total thickness of the plastic composite is relatively thin, for example, about one mm or less. For such purposes, it is preferred to use an impact modifier which is a multi-layered, sequentially-produced acrylic resin-based polymer having an elastomeric (soft) core and one or more outer resinous layers which have little or no tendency to dissociate (less than about 10 wt.% dissociation, if any). A preferred non-dissociable soft-core modifier which is recommended for use is the subject of aforementioned U.S.-A-3,808,180 although other types of acrylate-based, non-dissociable soft core modifiers, for example, as referred to hereinabove, can be used, either in place of these preferred resins or in admixture therewith.

The amount of the non-dissociable soft core modifier will generally not exceed about 5 wt.% of the composition, for example, from about 1 to about 5 wt.% of the composition. Preferred amounts comprise from about 1.75 to about 3.25 wt.%.

For those applications in which the composition includes a dissociable soft core modifier, the compositions can be prepared conveniently from a pre-mix which includes such resin and to which there can be added subsequently the PVC constituent and other ingredients that may be included in the composition. For the PVC/dissociable soft core composition, the pre-mix can comprise from about 90 to about 98 wt.% of the dissociable soft core modifier and from about 2 to about 10 wt.% of the non-dissociable soft core modifier, with preferred amounts being respectively from about 94 to about 98 wt.% and from about 2 to about 6 wt.%. For the hard core composition, the pre-mix can comprise from about 30 to about 70 wt.% of a thermoplastic resin (other than PVC) having weathering properties, from about 20 to about 60 wt.% of the hard core modifier, and from about 1 to about 10 wt.% of the non-dissociable soft core modifier, with preferred amounts being respectively from about 55 to about 65 wt.%, from about 35 to about 45 wt.%, and from about 2 to about 5 wt.%.

Each of the embodiments of the compositions of this invention can include optional ingredients, examples of which are: colorants, for example, dyes and pigments; lubricants; UV and thermal stabilizers; processing aids; inorganic fillers; flatting agents; heat distortion modifiers; flame retardants; and smoke suppressants. In general, the total amount of such optional ingredients will not exceed about 10 wt.% of the composition, for example, from about 4 to about 8 wt.% of such ingredients.

It is believed that the compositions of the present invention will be used most widely as capstock in a composite in which the ply which underlies the capstock is PVC, including chlorinated PVC and homopolymers and copolymers of vinyl chloride, as described hereinabove. The capstock of the present invention can be used to impart desired properties to other structural plastics, including, for example, plastics prepared from other vinyl halide polymers, acrylic resins, acrylonitrile/butadiene/styrene (ABS) resins, polystyrenes, a blend of ABS and PVC, a blend of PVC and an acrylic-imide copolymer, such as a methacrylic/glutarimide copolymer or an acrylic/maleimide copolymer; polyolefins such as polypropylene; styrene/(meth)acrylic and (meth)acrylic multistage polymers; polyamides, polyamide-multistage polymer blends, such as polyamide/ABS; polyamide/ polycarbonate blends; styrene/acrylonitrile copolymers and styrene/acrylonitrile - multistage polymer blends; ethylene/propylene/diene rubber blends with styrene/acrylonitrile copolymers or with polypropylene; alpha-methylstyrene/acrylonitrile, alpha-methylstyrene/styrene/acrylonitrile, alpha-methylstyrene/methyl methacrylate/ethyl acrylate; polycarbonate, polycarbonate-ABS blends, polycarbonate-multistage polymer blends; polyesters such as polyethylene terephthalate, polybutylene terephthalate, polybutylene terephthalate-polycarbonate blends, polybutylene terephthalate-polycarbonate blends, polybutylene terephthalate-multistage polymer blends, polybutylene terephthalate/polytetrahydrofuran, polyvinyl chloride-multistage polymer blends, polyvinyl chloride-(meth)acrylate blends, chlorinated polyvinyl chloride, acrylonitrile/(meth)acrylate-multistage polymer blends, acrylonitrile/(meth)acrylate/styrene, polycaprolactone, polyarylate, poly(meth)acrylates, polyacetal, high impact polystyrenes, styrene/maleic anhydride, styrene/maleimide, polyvinylidene fluoride, polyvinylidene fluoride-multistage polymer blends, cellulosics, polyamideimide, polyetherester, polyetheresteramide and polyetheramide, polyphenylene oxides, polysulfones. Blends may be prepared from other polymer systems including polyphenylene sulfide, polyphenylene oxide, polysulfone, polyphenylene oxide styrene blends, polyphenylene oxide-high impact polystyrene blends, polyvinylidene chloride, polyvinylidene chloride/(meth)acrylonitrile, polyvinylidene chloride/(meth) acrylate, polyvinyl acetate, polyetheretherketone, polyetherimide, thermoplastic polyimides, polyolefins such as polyethylene, polypropylene, and copolyolefins, and other polymer types. Random or block copolymers which combine the different functionalities can also be used, and ternary or higher blends can be made from combinations of any of these polymer types for use as substrates with the capstock of this invention. (In the above copolymer examples, and as used generally in the art, the slash mark ("/") is employed to indicate the copolymers so described as resulting from the copolymerization of their components blends and mixtures, on the other hand, normally are stated as such. Also, the term "(meth)" as applied, for example, in "(meth)acrylic," is a convention widely used in the art which denotes "acrylic or methacrylic.") Thus, a wide variety of structural plastics, typically referred to in the art as "rigid thermoplastics," may be used as an underlying layer, or substrate, with the capstocks of the invention. These structural plastics can be used singly as the structural plastic with the capstocks of this invention or they also may be used more than singly or also in a blend of two or more polymers or copolymers to form a structural plastic blend. When more than one substrate layer is used, an adhesive (or "tie") layer also may be used. The polymers and structural plastics and blends may contain acrylic or (meth)acrylic/butadiene/styrene ("MBS") or ethylene/propylene/diene ("EPDM") polymer impact modifiers. They also may incorporate fillers described herein below. The capstock of the present invention also can be used as a surfacing material for foamed plastic, for example, foamed PVC and foamed ABS.

For use as capstock, it is preferred that the composition be opaque to UV light and visible light (<520 nm). Species of compositions within the scope of this invention are opaque (for example, at least 95% opaque to light). As may be needed, opacifiers and/or pigments are added to the composition to render them opaque.

It should be understood that the composition of the present invention can be used in an application in which the composition is not compatible with an underlying structural plastic material such as, for example, a polyolefin or a polystyrene. A composite of this type can be made effectively by including between the capstock and structural plastic a mutually compatible adhesive which adheres the incompatible materials together.

The resin composition of the present invention can be extruded, molded, formed, or pressed into monolithic sheets or films, including capstock, using conventional equipment. The composition can also be formed according to conventional techniques. Structural plastics can be capped with the aforesaid resin composition by employing standard lamination or coextrusion techniques and equipment such as press lamination, bi-extrusion, and co-calendering; solution casting methods also may be used to provide laminated materials of the invention.

It is preferred to form sheet and sheet-like composites of the present invention by the use of feedblock coextrusion. The term "feedblock coextrusion," as used herein, refers to a process in which each of a resin supply of a first plastic material (for example, a structural plastic material) and a resin supply of a second plastic material (for example, a capstock material) is heated to a molten condition as separated streams thereof are fed to a feedblock in which the streams are brought together in face to face surface contact to form a two-ply stream which in turn is fed to a sheet die in which the two-ply stream is spread laterally into a two-ply sheet under conditions of laminar flow, with the molten resin plies of the sheet being in face to face surface contact as they emerge from the die, the shaped two-ply sheet thereafter being cooled and solidified, the resultant composite comprising each of the plies of the sheet integrally bonded to each other by the solidified resins comprising the sheet. As is known in the art, the process of feedblock coextrusion can be used to produce a sheet of more than two plies by use of a feedblock which is designed to accomodate more than two streams of resin or a feedblock which splits two streams of resin and recombines them in multiple alternating layers.

Examples of uses for the capstock compositions of this invention include automotive applications such as decorative exterior trim, molding side trim and quarter panel trim panels, fender extensions, louvers, rear end panels, pickup caps, rearview mirror housings, instrument knobs, snap-on and other fasteners for interior or exterior trim, accessories for trucks, buses, campers, vans, and mass-transit vehicles, b-pillar extensions, and the like; appliances and tools such as lawn and garden implements and fencing, bathroom fixtures for mobile homes, components of pleasure boats, exterior components of mobile homes, lawn furniture such as chair and table frames, pipe and pipe end caps, luggage, shower stalls for mobile homes, toilet seats, signs, spas, air conditioner and heat pump components, kitchen housewares, bead-molded picnic coolers, picnic trays and jugs, and trash cans; venetian blind components; sporting goods such as sailboards, sailboats, water skis; plumbing parts such as lavatory parts and the like; construction components, in addition to those mentioned previously, the additional components including architectural moldings, door molding, louvers, and shutters, mobile home skirting, patio doors, siding accessories, window cladding, storm window frames, skylight frames, end caps for potters, awnings and car port roofs, and the like. This list exemplifies the types of applications and uses of the capstocked materials of this invention.

Optional ingredients that can be used in the composition of the present invention are color concentrates, for example, dyes and pigments, lubricants, UV stabilizers, thermal stabilizers, antioxidants, heat distortion temperature improvers, antistatic agents, matting agents, flame retardants, and processing aids. In general, the total amount of such optional ingredients will generally not exceed about 5 wt.% of the composition, for example, about 1 to about 5 wt.% of such ingredients. The optional ingredients may be used in the capstock composition, the structural plastic, or in both. Additionally, fillers such as wood fibers, carbon fibers, and glass fibers and the like may be optionally included in the composition of the present invention, although these particular fillers would be expected to be poorly resistant to weathering. Additionally, glass beads and minerals such as calcium carbonate, talc, titanium dioxide, barium sulfate, and the like also may be optionally included in the composition of the present invention. In general, the total amount of such optional fillers will not exceed about 15 weight percent in the capstock and about 65 weight percent in the structural plastic or substrate.

The following examples are illustrative of the invention.

Examples

The composition of Example 1 comprises a mixture of matrix resins and a hard core, impact-modifier resin.

Example 1-Hard Core Composition

The composition of Example 1 is prepared from a mixture of three different matrix resins designated (A), (B) and (C) below.

Matrix Resins

(A) This matrix resin is PVC, the source of which is a fully-formulated PVC composition which comprises the following constituents in the amounts indicated (parts per hundred).

| | Ingredients | Amount, phr |
|---|---|---|
| (a) | PVC, K69 | 100 |
| (b) | non-dissociable, soft core, impact-modifier resin based on 80 wt.% butyl acrylate core and 20 wt.% methyl methacrylate shell | 5 |
| (c) | tin carboxylate stabilizer | 3 |
| (d) | lubricant mixture-1.2 phr calcium stearate, 0.4 phr paraffin wax, 0.15 phr of polyethylene wax, & 0.6 phr of a lubricating processing aid (high molecular weight acrylic/styrene polymer) vinyl acrylate resin | 2.35 |
| (e) | fusion aid - high molecular weight acrylic processing aid | 1 |
| (f) | triazole UV stabilizer | 0.17 |

The PVC composition described above is prepared by blending the components in a high intensity mixer. (B) This matrix resin is a random copolymer of 91 wt.% methyl methacrylate and 9 wt.% ethyl acrylate having a molecular weight of about 95,000 daltons. The copolymer is prepared in a continuous flow, stirred tank reactor in the presence of an organic peroxide. (C) This matrix resin is a random copolymer of 91 wt.% methyl methacrylate and 9 wt.% of ethyl acrylate having a molecular weight of about 100,000 daltons. The copolymer is prepared by emulsion polymerization, first by forming a seed in situ and then by forming the rest of the polymer by a reactor/batch process. The impact-modifier resin used in the composition of Example 1 is as follows.

Hard Core, Impact-Modifier Resin

The modifier resin comprises polymeric particles having three layers and is prepared by the multiple-stage, sequential procedure described in U.S.-A-3,793,402. The core layer and outer layer are each composed of random copolymers of approximately 96 wt.% methyl methacrylate and 4 wt.% ethyl acrylate, with the core layer copolymer graft-linked with 0.2 wt.% allyl methacrylate. The intermediate layer is a random copolymer of about

12

81 wt.% butyl acrylate and 18 wt.% styrene, graft-linked with about 1 wt.% allyl methacrylate. The proportions of the core, intermediate, and outer layers are 35%, 45%, and 20%, respectively. The modifier resin has a particle size of from about 250 to about 350 nanometers.

Blending of the Resin Constituents

The resin constituents described above are blended in the manner described hereinbelow to provide the composition of Example 1 which contains the following ingredients in the amounts indicated.

## Composition of Example 1

| Ingredients | wt.% |
| --- | --- |
| PVC resin | 44.8 |
| MMA/EA resin (B) | 25 |
| MMA/EA resin (C) | 5 |
| hard core, impact-modifier resin | 20 |
| non-dissociable, soft core, impact-modifier resin | 2.2 |
| tin carboxylate stabilizer | 1.4 |
| lubricants | 1.1 |
| fusion aid | 0.4 |
| UV stabilizer | 0.1 |

In preparing the composition of Example 1, a mixture of matrix resin (C) and the hard core, impact-modifier resin is prepared and then admixed with matrix resin (B). The mixture is prepared by combining 20 wt.% of a latex containing 50 wt.% of the resin of (C) above with 80 wt.% of impact-modifier resin in a vessel equipped with a stirrer and blending to homogeneity. The blend is spray dried and isolated as a free flowing powder. Fifty parts by weight of this mixture are mixed manually with 50 parts by weight of matrix resin (B) to provide a composition containing 50 wt.% of matrix resin (B), 10 wt.% of matrix resin (C) and 40 wt.% of impact-modifier resin. This composition is melt blended in a conventional extruder and extruded to pellets. The pellets are combined with the fully-formulated PVC composition in a 50/50 weight ratio in a polyethylene bag where they are mixed by manual agitation. The dryblend is then fed to a single screw extruder (25 mm diameter by 600 mm effective screw length) for melting and dispersive mixing. The barrel zones and die zone are controlled at 196°C, with the melt extruded as a strand, cooled in water, and pelletized.

The next example is illustrative of a composition like that of Example 1, but containin different amounts of constituents.

Example 2-Hard Core Composition

The composition of this example is prepared utilizing different proportions of ingredients as described hereinbelow. The composition, which is prepared in the form of pellets, comprises the following.

## Composition of Example 2

| Ingredients | wt.% |
|---|---|
| PVC | 22.4 |
| MMA/EA matrix resin (B) | 37.5 |
| MMA/EA matrix resin (C) | 7.5 |
| hard core, impact-modifier resin | 30 |
| non-dissociable, soft core, impact-modifier resin | 1.13 |
| tin carboxylate stabilizer | 0.7 |
| lubricants | 0.52 |
| fusion aid | 0.2 |
| UV stabilizer | 0.05 |

The composition of Example 2 is prepared by combining the matrix-resin-containing pellets and PVC composition referred to in Example 1 in a 75/25 weight ratio.

### Examples 3 & 4-Hard Core Compositions

The next two examples are illustrative of compositions similar to those of Examples 1 and 2, but containing only one type of acrylic resin as a matrix resin, that is, resin (C) above. The compositions comprise the following.

| Ingredients | Amts, wt.%-Comps. of | |
|---|---|---|
| | Ex. 3 | Ex. 4 |
| PVC | 44.8 | 22.4 |
| MMA/EA matrix resin (C) | 30 | 45 |
| hard core, impact-modifier resin | 20 | 30 |
| non-dissociable, soft core, impact-modifier resin | 2.2 | 1.13 |
| tin carboxylate stabilizer | 1.4 | 0.7 |
| lubricants | 1.1 | 0.52 |
| fusion aid | 0.4 | 0.2 |
| UV stabilizer | 0.1 | 0.05 |

The composition of Example 3 is prepared by blending 60 parts by weight of the MMA/EA type latex referred to in Example 1 with 40 parts by weight of the hard core, impact-modifier resin (the source thereof also a latex). The resulting homogeneous blend is then spray dried. Fifty parts by weight of the resulting resin powders are combined with 50 parts by weight of the PVC composition and then formed into pellets as described in Example 1. The composition of Example 4 is prepared in the same way as that of Example 3 except that 75 parts by weight of the resin powders are combined with 25 parts by weight of the PVC composition.

The next example is illustrative of a composition of the present invention in which there is used a soft core impact-modifier resin.

### Example 5-Dissociable, soft Core Composition

The composition of this example includes a dissociable, soft core resin like that described in Example 1 of aforementioned US-A-4,141,935. The resin, as described in the patent, is prepared from the following constituents in the amounts indicated in a four-stage sequential polymerization: first stage - 25[butyl acrylate (BA)/1,3-butylene glycol diacrylate (BDA)/allyl methacrylate (ALMA) - 98.5/1.0/0.5]; second stage - 25[BA/methacrylic acid (MA)/ALMA-40/60/0.5]; third stage - 25[methyl methacrylate (MMA)/BA/n-dodecyl mercaptan (n-DDM) - 90/10/0.5]; fourth stage - 25[MMA/BA/n-DDM)- 90/10/1.5]. The resin is recovered in the form of a latex having a solids content of about 45 wt.%.

The composition of Example 5 comprises the following.

| Ingredients | wt.% |
|---|---|
| PVC | 44.8 |
| dissociable, soft core modifier resin | 50 |
| soft core, impact-modifier resin | 2.2 |
| tin carboxylate stabilizer | 1.4 |
| lubricants | 1.1 |
| fusion aid | 0.4 |
| UV stabilizer | 0.1 |

The composition of Example 5 is prepared by combining the dissociable, soft core, modifer resin with the fully-formulated PVC composition described above in a 50/50 weight ratio in a polyethylene bag and mixing by manual agitation. This dryblend is then fed to a single screw extruder (25 mm diameter by 600 mm effective screw length) for melting and dispersive mixing. The barrel zones and die zone are controlled at 180°C, with the melt extruded as a strand, cooled in water, and pelletized.

To each of the compositions of Examples 1 to 5 is added a brown concentrate comprising 21.8 wt.% of brown pigment (Chromophthal 5R of Ciba Geigy Co), 72 wt.% of violet dyes, and 71 wt.% of an acrylate resin dispersion aid. The concentrate is added on the basis of 4 parts by weight of concentrate per 100 parts by weight of each of the compositions of Examples 1 to 5. The resulting compositions are used as capstock over PVC resin substrates, each of which is composed of the following ingredients.

| Ingredients of PVC Structural Plastic | Amounts, phr |
|---|---|
| PVC, K69 (Geon 103EPF76) | 100 |
| non-dissociable soft core, impact-modifier resin (KM-334 of Rohm and Haas Co.) | 5 |
| TiO$_2$ pigment | 4 |
| CaCO$_3$ filler | 5 |
| lubricant mixture-1.9 phr calcium stearate, 1.3 phr paraffin wax, & 0.3 phr of vinyl acrylate resin | 3.5 |
| tin mercaptide stabilizer | 1.1 |
| acrylic processing-aid resin | 0.5 |

The composition described above is prepared by blending the ingredients in a high intensity mixer.

Composites are formed from the PVC structural plastic composition and the capstock compositions of Examples 1 to 5 utilizing conventional feedblock coextrusion. Appropriate charges are made to the hoppers of separate extruders. The extruder for the PVC structural plastic composition is a 25 mm conical counter-rotating twin screw extruder. The extruder for the capstock compositions is a 25 mm single screw extruder. Convergence of the melt streams is effected by a feedblock that has a 3.2 mm by 3.2 mm orifice vertically centered over the melt stream from the extruder for the structural plastic composition in the die, through which the capstock composition flows and distributes into a 4"-wide composite which is then air cooled and cut to length for testing.

The feedblock temperature is 160-177°C and the die temperature 177-193°C. The temperatures associated with the extruder for the capstock compositions are as follows.

| Capstock Composition | Melt Temp., °C | Barrel Temperatures, °C | | |
|---|---|---|---|---|
| | | Zone 1 | Zone 2 | Zone 3 |
| Exs. 1, 2, 3 & 4 | 205 | 188 | 189 | 193 |
| Ex. 5 | 196 | 177 | 182 | 188 |

The extruded composites had capstock thicknesses of about 5 to about 10 mils (0.125 to 0.25 mm) and the thicknesses of the PVC structural plastic plies are from about 30 to about 35 mils (0.76 to 0.90 mm), with the composites being from about 40 to about 45 mil (1.0 to 1.14 mm) in total thickness. Such composites are typical of materials used in the residential siding industry.

Table 1 below shows the impact strengths of unembossed samples of the composites of the capstock/PVC substrates for those composites made from the capstock compositions of Examples 1, 2 and 5.

## Table 1

| Capstock Composition | Impact (ASTM D 4226A-85), Joules/mm |
|---|---|
| Ex. 1 | 13.5 (sigma 0.5) |
| Ex. 2 | 9.8 (sigma 1.5) |
| Ex. 2 (second sample) | 10.5 (sigma 2.2) |
| Ex. 5 | 13.4 (sigma 1.6) |

The industry standard for residential siding is a minimum of 8.9 Joules/mm (unembossed). PVC substrates (without capstock) yield values typically in the range of about 10 to 14 Joules per millimeter thickness. Thus, it can be seen that the impact strengths of the composites are satisfactory for their intended use and, in fact, are not affected adversely by the capstock.

Table 2 below shows characteristics of color retention for composites prepared in accordance with this invention utilizing the capstock compositions identified in Table 2. Co-extruded capstock/PVC substrate composites are tested by the Xenon Arc/Weathering Test methods described in ASTM Method G 26, Method A, utilizing a BH-type apparatus. The irradiating source uses Type S borosilicate filters (inner and outer) set for 0.35 W/square meter with the wavelength band at 340 nanometers. The black panel temperature is set at 63°C; cycle is 102 minutes of light, 18 minutes of light plus water spray (16 deg.C, +/- 5 C deg.); the dry cycle is set at 50% relative humidity. Differences in total Hunter color change (Delta E) are calculated by the procedures of ASTM Method D 2244 using an integrating sphere colorimeter (Hunter D25-9). Test samples are evaluated with the specular component excluded.

## Table 2

| Capstock Composition | Change in Total Color (Delta E) in Xenon Arc, with Weathering (ASTM G 26), after Hours Stated | | | |
|---|---|---|---|---|
| | 500 | 2000 | 3500 | 5000 |
| Ex. 1 | 1.15 | 2.9 | 3.9 | 5.8 |
| Ex. 2 | 0.75 | 1.7 | 2.7 | 5.5 |
| Ex. 5 | 0.74 | 1.9 | 2.5 | 2.8 |

16

PVC-based and other capstock materials such as resins based on styrene/acrylonitrile (SAN) polymers or copolymers, SAN-grafted polymers or copolymers, and blends of the aforementioned SAN polymers with other polymers typically have Delta E values of from about 2 to about 3 after 2000 hrs. and from about 4 to about 11 after 4000 hrs; and from about 4 to about 11 after 5000 hrs.

## Claims

1. A resinous composition comprising:
   (A) from 20 to 50 parts by wt. of poly(vinyl chloride) or copolymer containing more than 50% by weight vinyl chloride units (PVC) (which may be chlorinated PVC);
   (B) from 50 to 75 parts by wt. of a plurality of multi-layered, sequentially-produced, acrylic resin-based polymeric particles having an elastomeric crosslinked core sheathed by a plurality of polymeric shells, a resin portion thereof being dissociated therefrom, the dissociated portion of resin being compatible or miscible with said PVC;
   (C-1) from 17 to 38 parts by wt. of thermoplastic resin (other than PVC) which has good weathering properties and is compatible or miscible with PVC;
   (C-2) from 12 to 33 parts by wt. of acrylate-based, hard core, impact-modifier resin in the form of discrete particles;
   (C-3) from 12 to 33 parts by wt. of acrylate-based, non-dissociable, soft core, impact-modifier resin in the form of discrete particles;
   in the possible combinations: (A) plus (B); (A) plus (C-1) plus (C-2); (A) plus (C-1) plus (C-3); (A) plus (B) plus (C-1);
   wherein the resins (as present) of (A) and (C-1) above and the dissociated portion of resin of (B) above constitute a continuous phase of said composition in which are dispersed (as present) the residual particles of (B) above and the resin particles of (C-2) and (C-3) above.

2. A composition as claimed in Claim 1 wherein the thermoplastic resin (C-1) is miscible with said PVC and has a molecular weight of at least 80,000 daltons and comprises poly(methyl methacrylate) and/or copolymer of methyl methacrylate and $(C_1$ to $C_4)$-alkyl acrylate.

3. A composition as claimed in Claim 2 comprising (A) plus (B) plus (C-1) plus from 1 to 5 parts by wt. of non-dissociable soft core, impact-modifier acrylic resin

4. A composition as claimed in any preceding claim wherein resin (C-2) comprises multi-layered polymeric particles having an intermediate layer sandwiched between a core layer and an outer layer, the core layer being of non-elastomeric polymer, the intermediate layer being of elastomeric polymer, and the outer layer being of hard polymer, preferably, wherein each of the core and outer layers comprise random copolymers of methyl methacrylate and ethyl acrylate and the intermediate layer comprises a random copolymer of butyl acrylate and styrene.

5. A composition as claimed in any preceding claim wherein the polymeric particles (B) have an elastomeric cross-linked core sheathed by a plurality of polymeric shells, including an outer shell, and in which at least 20 wt.%, preferably at least 30 wt.%, of the shell portion of the resin has the ability to dissociate therefrom under melt process conditions to form an homogeneous alloy matrix phase with the PVC.

6. A composition as claimed in any preceding claim including, as resin (C-1), alpha-methyl styrene/methacrylate resin, methacrylate/acrylate resin, methacrylate resin, styrene/methacrylate resin and/or styrene/acrylonitrile resin.

7. A composition as claimed in Claim 2 wherein the thermoplastic resin comprises copolymer of from 0.1 to 15 wt.%, preferably 8 to 13 wt.% alkyl acrylate, preferably ethyl acrylate, and from 85 to 99.9 wt.% preferably 87 to 92 wt.% of methyl methacrylate; said composition preferably having a molecular weight from 80,000 to 130,000 daltons.

8. A composition suitable for use in preparing a composition as claimed in Claim 1 comprising (a) a mixture of from 90 to 98 wt.% of polymer (B) and from 2 to 10 wt.% of impact-modifier acrylic resin (C-2) or (b) a mixture of from 30 to 70 wt. % of resin (C-1) and from 20 to 60 wt.% of resin C-2, and from 1 to 10 wt. %

of resin (C-3).

9. A composition as claimed in any preceding claim in the form of capstock which, optionally, is opaque.

10. A composite comprising a laminate in which capstock as claimed in Claim 9 overlies PVC structural plastic and is opaque or overlies a structural plastic comprising chlorinated PVC, acrylic/butadiene/styrene (ABS) resin, a blend of ABS and PVC, or a blend of PVC and acrylic-imide copolymer.

11. A composite comprising laminate in which capstock as claimed in Claim 9 overlies a structural plastic comprising polyolefin which is incompatible with the material of the capstock, and including an adhesive layer disposed between the capstock and the structural plastic to adhere the two materials.

12. A process for forming a laminate which comprises subjecting a composition as claimed in any of Claims 1 to 8 and structural plastics material to feedblock coextrusion or multi-manifold coextrusion.

13. An article formed from a composition or composite as claimed in any of Claims 1 to 11 or by a process as claimed in Claim 12, especially a composite including a ply formed from a composition as claimed in any of Claims 1 to 8 in the form of siding, rain gutter or shutter, or window frame or door frame or other technical profile.